# EUROPEAN PATENT APPLICATION

(11) **EP 1 083 492 A2**
(43) Date of publication of application: **14.03.2001**
(21) Application number: 00307084.4
(22) Date of filing: 18.08.2000
(51) Int. Cl.: G06F 17/24, G06F 17/30

(54) **History-based document differencing showing nature of differences**

(30) Priority: 02.09.1999 US 389843
(71) Applicant: Adobe Systems, Inc., San Jose, California 95110 (US)
(72) Inventor: Ayers, Robert M., Palo Alto, California 94301 (US); Sites, Richard L., Menlo Park, California 94025 (US); Pravetz, James D., Sunnyvale, California 94086-4306 (US)
(74) Representative: Wombwell, Francis

(57) **Abstract**

Electronic document version management for multiple versions of an electronic document displays the nature of the changes made between versions of an electronic document.

## Description

### BACKGROUND OF THE INVENTION

The present invention relates to version management of electronic documents.

When an electronic document is revised by different people, and when previous versions must be preserved, it is important for a document editing and management system to be able to manage multiple versions of a document.

Current version management systems provide numerous methods for detecting, recording and providing notification of alterations made between two versions of a document. One system uses pointers shared by a plurality of versions for indicating active lines of a version. Other systems use version history tables or files to show the differential page content and field content between versions.

### SUMMARY OF THE INVENTION

The invention provides electronic document version management in a way that manages multiple versions of an electronic document and displays the nature of the differences made between versions of an electronic document.

Advantages that can be seen in implementations of the invention include one or more of the following. The invention provides a user with a version history of an electronic document showing the nature of the differences made between two versions. It does so without having to recalculate the nature of the differences each time the electronic document is opened. Because the user sees the nature of the differences instead of the differences themselves, the user can quickly confirm that only differences of an appropriate kind have been made to a document. For example, where the original document is a form that has fields that will be filled in by one or more people and in the process be approved by one or more people, a person viewing a final version can see at a glance from the version history who has altered the document and the kinds of changes each person has made. For example, the version history can provide a summary of the number of changes made to previously-blank fields or previously filled-in field values of the document.

The details of one or more embodiments of the invention are set forth in the accompanying drawings and the description below. Other features and advantages of the invention will become apparent from the description, the drawings, and the claims.

### BRIEF DESCRIPTION OF THE DRAWINGS

FIG. 1 is a flowchart of a process for processing an electronic document in accordance with the invention.
FIG. 2A shows a document in its original form.
FIGS. 2B and 2C show altered versions of the document.
FIG. 2D shows an altered version of the document on a user interface.

Like reference numbers and designations in the various drawings indicate like elements.

### DETAILED DESCRIPTION

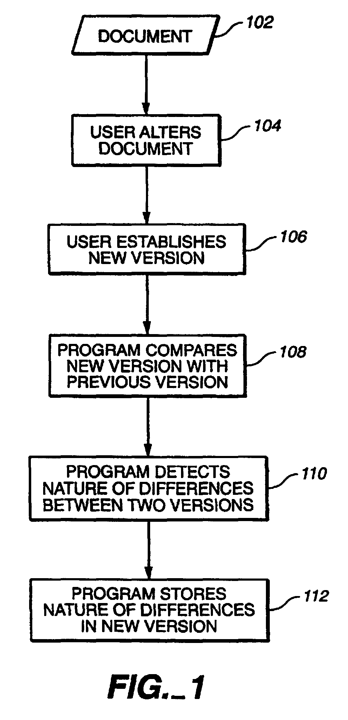

FIG. 1 shows a process suitable for implementation in a computer program application for processing an electronic document of a kind that can have a sequence of versions beginning with an original version and ending with a current version. For example, the process is suitable for use with documents that have fields that are filled in by one or more users to create a sequence of versions. The application need not limit alterations to filling in fields, however. The versions may differ arbitrarily from one version to the next. Also, a document does not have to be stored in a single data file in a computer file system. A document can be stored in a portion of a file that holds other documents, in a single file dedicated to the document in question, or in a set of coordinated files, stored in the file system of one computer or distributed over multiple computers.

When the application displays the document, the user typically views a portion of the current version of the document 102. One or more users may alter the current version of the document (step 104), and at some point a user establishes a new version (step 106). Generally, this will occur after a single user has completed making changes to the document and has closed the editing session, for example, by saving the document to non-volatile storage, such as a disk file, or by forwarding the document to another user in a document approval and review system.

FIG. 2A shows an original version of a two-page document 202 with blank fields prior to any alterations. Alterations may be made to the document's field content by filling in previously blank fields 208, or by changing previously filled-in field values 210. Alterations may also be made to the document's general content by editing the pages 206 of the document. The term general content will be used to all font and image information in a document outside the fields.

Returning to FIG. 1, when the user establishes a new version of the document, the document as it existed before any alterations is preserved as the previous version in the sequence of versions, and the new version becomes the current version. The application compares the new version with the previous version (step 108) and detects the nature of alterations between the two versions (step 110). In one implementation, the nature of the alterations is defined according to a taxonomy that includes the following types of alterations: (I) changes to previously filled-in fields; (ii) changes to previously blank fields; and (iii) changes to the general content of a page. The alterations are detected on a page-by-page basis. In alternative implementations, the granularity can be larger or smaller; for example, the alterations can be detected on a paragraph-by-paragraph basis, section-by-section, or otherwise.

The application stores the nature of the alterations (step 112) in the document as a version history. This can be done using any technique for adding information or properties to a document, such as by appending a version object to the document. In one implementation, the application determines whether the general content of a page has changed by calculating a hash function (such as MD5) of the current and previous version of the same page by order in the document. Similarly, the application determines whether the content of the individual fields has changed, and if so, whether the change was from a blank or a non-blank content. This information is stored as three numbers associated with the now-current version in the version history of the document.

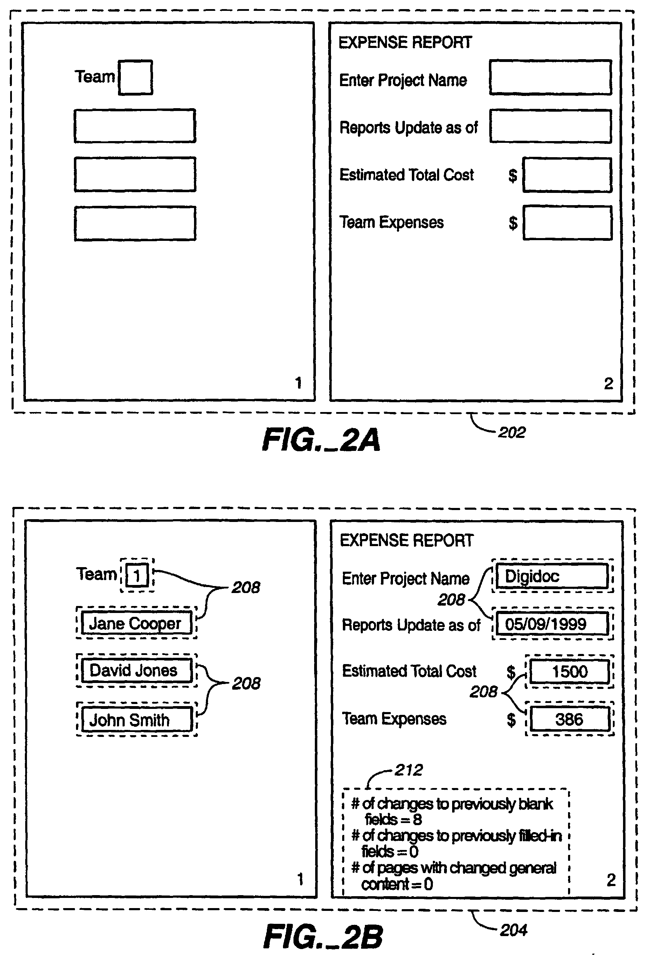

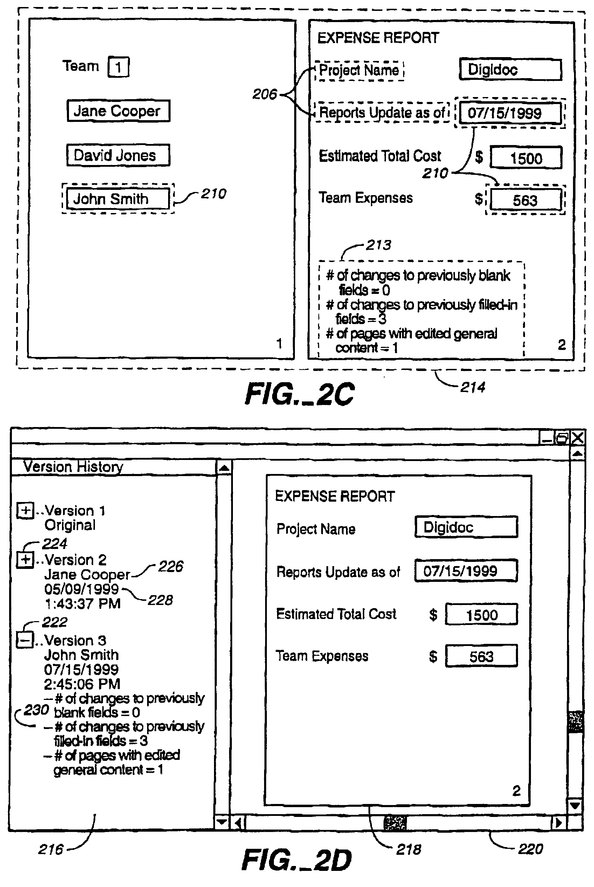

As shown in FIG. 2B, the application can display, floating over the display of the document, the number of each type of alteration from the previous version to the displayed version of the document. These numbers provides an at-a-glance summary of the nature of the alterations made between the displayed and the immediately-previous version of the document. The version history 212 in FIG. 2B shows that after a user filled in eight previously-blank fields 208 and made no other changes, the user established a new version 204 in the sequence of versions. The version history 213 shown in FIG. 2C shows that a user established a new version 214 of the document 204 by changing three previously filled-in fields 210 and editing the general content of one page.

As shown in FIG. 2D, the application can also display the document's version history in a pane 216 alongside the document 218 on a user interface 220. The version history can be collapsed by clicking the minus sign 222 or expanded by clicking the plus sign 224, for example. By collapsing the version history, the user views only select information about the document, such as the name of the user 226 that established a particular version of the document, as well as a date and time stamp 228 for that version, which can optionally be maintained in the version history of the document. Expanding the version history 230 provides the user with more information, including the nature of the alterations between two successive versions in the sequence of versions.

If a document is altered, the application maintains the previous version along with all earlier versions of the document. When a user views the document, the user typically views the current version. However, the other versions are available for viewing. If a previous version is selected for viewing, the version history of the selected version can be displayed at the end of the document, in a pane alongside the document, or otherwise.

The application can optionally be configured to display a document's cumulative version history up to a selected version, or to display a version history comparison between two non-contiguous versions selected by a user, or to display version histories for a range of versions selected by a user.

The invention can be implemented in digital electronic circuitry, or in computer hardware, firmware, software, or in combinations of them. Apparatus of the invention can be implemented in a computer program product tangibly embodied in a machine-readable storage device for execution by a programmable processor, and method steps of the invention can be performed by a programmable processor executing a program of instructions to perform functions of the invention by operating on input data and generating output. The invention can be implemented advantageously in one or more computer programs that are executable on a programmable system including at least one programmable processor coupled to receive data and instructions from, and to transmit data and instructions to, a data storage system, at least one input device, and at least one output device. Each computer program can be implemented in a high-level procedural or object-oriented programming language, or in assembly or machine language if desired; and in any case, the language can be a compiled or interpreted language. Suitable processors include, by way of example, both general and special purpose microprocessors. Generally, a processor will receive instructions and data from a read-only memory and/or a random access memory. Generally, a computer will include one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing can be supplemented by, or incorporated in, ASICs (application-specific integrated circuits).

To provide for interaction with a user, the invention can be implemented on a computer system having a display device such as a monitor or LCD screen for displaying information to the user and a keyboard and a pointing device such as a mouse or a trackball by which the user can provide input to the computer system. The computer system can be programmed to provide a graphical user interface through which computer programs interact with users.

The invention has been described in terms of particular embodiments. Other embodiments are within the scope of the following claims. For example, the steps of the invention can be performed in a different order and still achieve desirable results.

## Claims

1. In a system for processing an electronic document of a kind having a sequence of versions, a method comprising:
comparing a new version of the electronic document with a previous version of the electronic document in the sequence of versions;
detecting the nature of differences between the new version of the electronic document and the previous version of the electronic document; and
storing the detected nature of the differences between the previous version and the new version of the electronic document.

2. The method of claim 1, wherein the previous version is the immediately previous version of the electronic document.

3. The method of claim 1, wherein the detected nature of the differences is stored in the electronic document.

4. The method of claim 3, wherein:
the detected nature of the differences is stored as a group of numbers, each number representing a count of the occurrences of a difference of a particular kind.

5. The method of claim 3, further comprising:
storing data in the electronic document representing the detected nature of differences between each pair of successive versions in the electronic document.

6. The method of claim 3, wherein:
the detected nature of the differences is stored in the electronic document when the new version of the electronic document is saved in a non-volatile memory.

7. The method of claim 3, wherein:
the detected nature of the differences stored in the electronic document is a summary that provides less information than is required to produce the new version from the previous version of the electronic document.

8. The method of claim 1, further comprising:
displaying a version history including the detected nature of the differences between the previous version and the new version of the electronic document.

9. The method of claim 1, wherein the electronic document is of a kind having general content and field content, field content comprising a field definition and a field value.

10. The method of claim 6, wherein the nature of the differences comprises:
whether or not the differences between the new version of the electronic document and the previous version of the electronic document include changes to previously-blank fields;
whether or not the differences between the new version of the electronic document and the previous version of the electronic document include changes to previously filled-in field values; and
whether or not the differences between the new version of the electronic document and the previous version of the electronic document include other changes.

11. The method of claim 6, further comprising:
displaying a version history including the detected nature of the differences between the previous version and the new version of the electronic document.

12. The method of claim 6, wherein:
the electronic document is an electronic form having fields to be filled in by one or more users to create one or more versions.

13. The method of claim 1, wherein the versions in the sequence of versions are all stored in one or more named files in a computer file system.

14. In a system for processing an electronic document of a kind having a sequence of versions, a method comprising:
displaying on a display device for viewing by a user a version history of an electronic document showing the nature of differences between successive versions of the electronic document.

15. The method of claim 11, wherein the nature of differences comprises:
whether or not the differences between successive versions include changes to previously-blank fields;
whether or not the differences between successive versions include changes to previously filled-in field values; and
whether or not the differences between successive versions include other changes.

16. The method of claim 11, wherein the nature of differences is displayed as a group of numbers, each number representing a count of the occurrences of a difference of a particular kind, each number being displayed with text describing the particular kind of difference represented by the corresponding number.

17. The method of claim 11, further comprising:
reading the version history from the document.

18. A computer program product, tangibly stored on a computer-readable medium, for processing an electronic document of a kind having a sequence of versions, the product comprising instructions operable to cause a programmable processor to:
compare a new version of the electronic document with a previous version of the electronic document in the sequence of versions;
detect the nature of differences between the new version of the electronic document and the previous version of the electronic document; and
store the nature of the differences in the electronic document.

19. A computer program product, tangibly stored on a computer-readable medium, for processing an electronic document of a kind having a sequence of versions, the product comprising instructions operable to cause a programmable processor to:
display on a display device for viewing by a user a version history of an electronic document showing the nature of differences between successive versions of the electronic document.
